# EUROPEAN PATENT SPECIFICATION

(11) **EP 3 767 801 B1**
(45) Date of publication and mention of the grant of the patent: **10.12.2025**
(21) Application number: 20195466.6
(22) Date of filing: 02.08.2017
(51) Int. Cl.: H02K 5/12, H02K 5/22, H02G 15/013, H01R 4/26, H01R 13/533, H02G 3/22, H01R 13/17, H02K 3/52, H02K 7/14, F04D 17/12, F04D 25/06

(54) **CONNECTOR ASSEMBLY FOR ELECTRIC MOTOR**
ANSCHLUSSMONTAGE EINES ELEKTROMOTORS
ASSEMBLAGE DE CONNECTEUR POUR MOTEUR ÉLECTRIQUE

(43) Date of publication of application: 20.01.2021
(62) Divisional of application: 17184489.7
(73) Proprietor: Nidec ASI S.p.A., 20092 Cinisello Balsamo MI (IT)
(72) Inventor: Luise, Fabio, 30174 Zelarino - Venezia (IT); Asquini, Piter, 20092 Cinisello Balsamo MI (IT); Bertos, Matteo, 20092 Cinisello Balsamo MI (IT)
(74) Representative: Perani & Partners S.p.A.

(56) References cited:
- EP-A1- 2 375 072
- EP-A2- 0 556 862
- EP-A2- 2 595 255
- WO-A1-2016/106037
- JP-A- H05 291 036
- JP-A- S61 222 286
- US-A- 4 626 721
- US-A- 4 800 732
- US-A1- 2004 253 124
- US-A1- 2007 037 430
- US-A1- 2011 058 973
- US-A1- 2017 201 145
- US-B1- 6 296 525

## Description

### Field of the invention

The present invention relates to an electric motor, and in particular a motor where the active parts are housed in shell to be filled with a high pressure working fluid. In greater detail, the invention provides advantageous means connecting the active parts of the motor to an external power source.

### Background of the invention

The realization of electric motors is known in the art, where a stator has a cylindrical cavity and a cylindrical rotor is arranged rotatably inside the stator cavity. In some electric motors the stator and the rotor are arranged inside a shell which is filled with a working fluid, such that the active parts of the motor are immersed in the working fluid.

For example, in methane pipeline applications, a compressor for processing the methane is driven by a drive shaft connected to the rotor of an electric motor, and the compressor itself is arranged inside the shell of the electric motor. Therefore, the methane inside the shell may have a high pressure, for example in the order of 80 or 100 bar.

Moreover, the shell must be sealed in order to avoid any fluid leakage, while access of methane to, and its discharge from, the shell is only allowed through specific inlets and outlets of the shell which are provided for the operation of the compressor.

Such working conditions are very critical for the electrical connection of the stator windings to an external electrical power source. In fact, connecting means must pass through the shell without compromising its sealing, despite the high pressure difference between the internal working fluid and the external atmosphere, and the medium voltage electric power supply.

According to a known technique, which is shown for example in US 20070048151, conductive rods pass through the shell. In particular, in this document the conductive rods pass through an end cap of the shell. Inside the shell, flexible wires connect electrically the pass through rods with respective stator windings. The flexible wires must be connected to the stator windings and to the conductive rods when the end cap is separated from the shell main body, and then they deform while the shell cavity is closed.

The flexible wires must be enclosed in flexible insulating covers. In normal working conditions, a small amount of working fluid penetrates inside the flexible wires, and therefore an isostatic pressure is applied to the insulating cover. However, sudden pressure changes sometimes happen inside the shell. In this case, the working fluid takes a relatively long time to penetrate inside the flexible wires or to be ejected therefrom, and therefore the insulating cover is temporarily subject to remarkable pressure differences, which eventually bring to the disruption of the insulating cover with consequent electric faults.

This problem is tackled in US 20150061432, where only rigid connectors, and no flexible cables, are employed inside the housing. In particular, the document describes an interface for transmitting power to the stator windings of a motor which is arranged inside a housing filled with a high pressure gas.

The housing has a generally cylindrical shape with a main opening at one of the basis for accessing to the active parts, and a shield of the housing closes the main opening. The interface comprises penetrator assemblies, which are applied to the housing each at a respective lateral opening formed in the lateral surface of the housing.

Each penetrator assembly comprises a conductive rod passing radially through the respective lateral opening. One end of the conductive rod is received in a receptacle inside the housing. The receptacle is fixed to a rigid stator ring, which is electrically connected to the stator winding.

The motor is assembled by first inserting the compressor and the active parts inside the housing. Then, the penetrators are applied to the lateral openings and the conductive rods are coupled with the receptacles. Finally, the main opening is closed with the shield.

US 6300698 describes a hermetic compressor coupled to an electric motor. A hermetic terminal plug has conductor pins protruding from a lateral wall of the motor shell inside an internal chamber. A terminal block is mounted on the stator assembly for supporting end portions of the windings. The terminal block has notches aligned with the conductor pins for receiving the conductor pins when the motor is inserted into the shell.

US 2017201145 describes an electric motor having conductive rods extending through the motor shield, which are received in seats connected to the stator windings

EP 2375072 discloses a motor-driven compressor comprising a connector assembly.

### Summary of the invention

The applicant has perceived that in the motor of US 20150061432 many openings are required through the shell. Moreover, not only the shield but also each penetrator assembly must seal the respective opening. These features result in difficulties during the manufacture and assembly of the motor, and in an increase of the related costs.

Moreover, the penetrator assemblies are applied to lateral openings and their rods are oriented radially to mate with the receptacles. Therefore the receptacles, which are fixed to the stator via the stator rings, must be accurately aligned to the lateral openings in the axial direction. However, positioning the stator with such a precision may be difficult.

This is particularly true since, when the motor is in operating conditions, the temperature inside the shell rises, with a consequent deformation of the whole motor-compressor group, especially in the axial direction. A misalignment may therefore happen also after assembling the motor, with a consequent mechanical stress between the rods and the receptacles.

The applicant has also perceived that care must be taken while assembling the motor of US 6500698. In fact, the conductor pins and the slots of the terminal block shall be aligned in the axial direction while moving inside the shell a cumbersome component such as the stator. Moreover, a safe disconnection of the stator windings from the power source can be obtained only by removing the stator from the shell.

An object of the present invention is to provide an electric motor adapted to work submersed in a high pressure fluid wherein the electrical connection of the stator windings to an external power source is obtained relatively easily, and wherein no flexible cables are required inside the shell.

This and other objects are obtained with an electric motor according to any one of the appended claims. In particular, in the motor of the invention the connection of the stator windings with an external power source is obtained thanks to the connection of a first terminal and a second terminal. The second terminal is rigidly connected to a respective stator winding, while the first terminal is rigidly associated to a conductive rod which advantageously passes through the shield.

Therefore, the first and the second terminal are connected just by applying and fastening the shield to the main opening of the shell body. No additional openings are required and the sealing is made easier. Moreover, the shield is a relatively light and handy component, for example with respect to the stator, and therefore it can be positioned with a great accuracy.

Advantageously, only rigid connections may be employed, and the risk of damages to the insulation of flexible cables is prevented.

According to an additional advantageous aspect, the first and the second terminal are aligned in the axial direction. Therefore the first and the second terminal allow a sliding electric contact tolerating several millimetres of axial displacement and are not subject to high stresses also in case of thermal deformation of the motor.

More features and advantages of the electric motor according to the present invention will result from the following detailed description of a preferred embodiment of the present invention, which is illustrated as a non-limiting example in the annexed drawings, wherein:
- figure 1 shows a section view of an electric motor according to the invention driving a compressor,
- figure 2 shows a section view of a portion of the electric motor of figure 1, in a partially disassembled condition,
- figure 3 shows a section view of the portion of electric motor of figure 2, in assembled condition,
- figure 4 shows a section view of a detail of the motor of figure 1, in disassembled condition,
- figure 5 shows a section view of the detail of figure 4, in assembled condition,

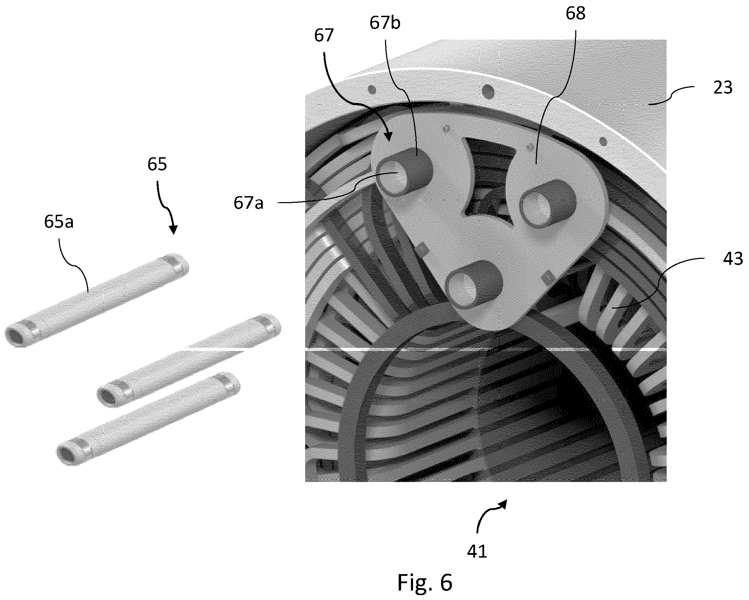

- figure 6 shows a partial perspective view of the electric motor of figure 1 in a partially disassembled condition,
- figure 7 shows a perspective view of a conductive rod of the electric motor of figure 1,
- figure 8 shows a perspective view of a shield of the electric motor of figure 1,

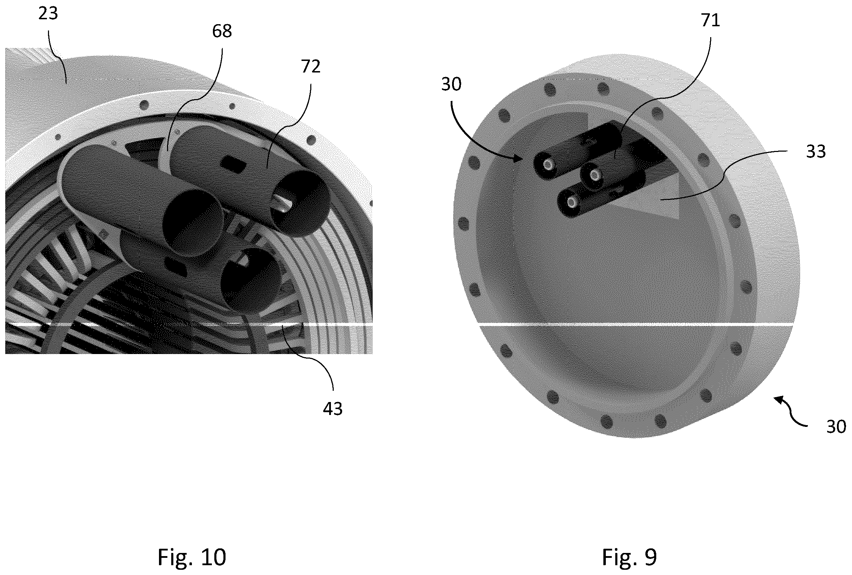

- figure 9 shows a perspective view of the shield of figure 8 provided with insulating sleeves, and
- figure 10 shows a partial perspective view of the electric motor of figure 1.

With reference to the accompanying figures, an electric motor is indicated globally with reference number 10. **In** the preferred embodiment the electric motor 10 is an induction motor, though other kinds of motor may be employed without departing from the scope of the invention.

The electric motor 10 comprises a shell 20 extending mainly in an axial direction X-X. The shell 20 has preferably a substantially cylindrical shape. In fact the shell 20 defines two substantially circular bases 21 spaced apart in the axial direction X-X, and a lateral wall 22 connecting the bases 21.

In particular the shell 20 comprises a shell body 23 and a shield 30. As it will be more clear, the shield 30 is adapted to be connected to and disconnected from the shell body 23. In the following, the motor 10 will be mainly described with reference to a closed configuration of the shell 20, i.e. a configuration where the shield 30 is operatively connected to the shell body 23. However, some details will be provided also to an open configuration where the shield 30 is disconnected from the shell body 23, and also to the passages between the open and the closed configuration.

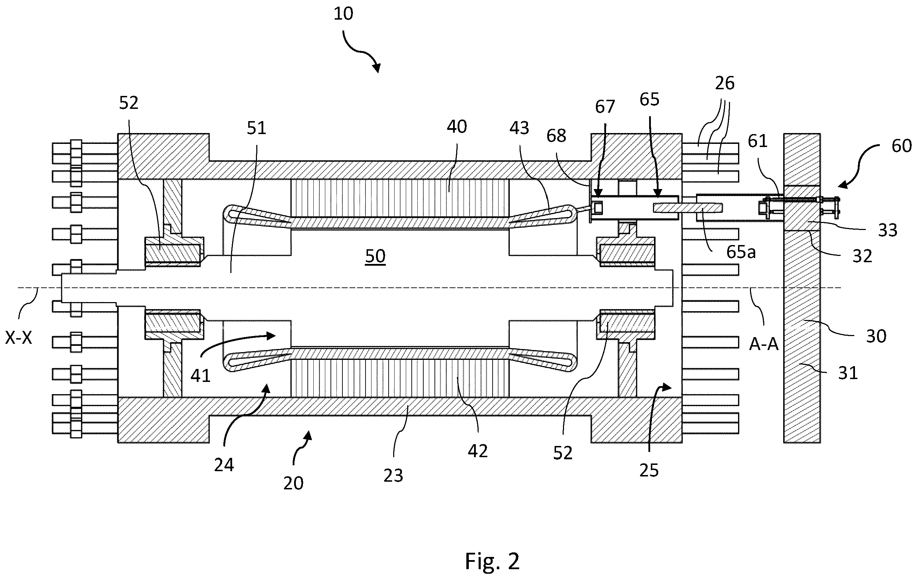

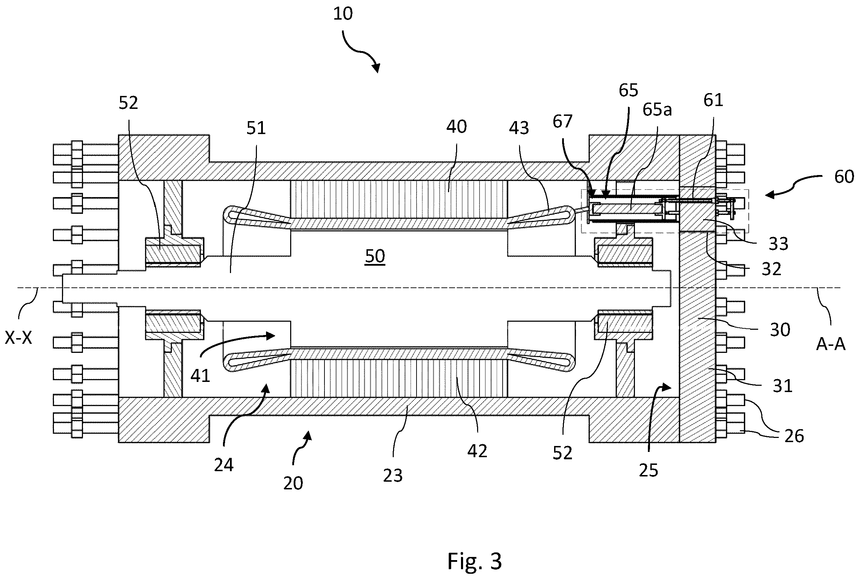

The shell body 23 defines the lateral wall 22 of the shell 20 and one of the two bases 21 of the shell 20, namely a first base of the shell 20, while in the closed configuration the shield 30 is arranged at the other of the two bases 21 of the shell 20, namely a second base of the shell 20. It is to be understood that the shell body 23 may be formed as one piece or by more pieces fixed together. For example, figures 2 and 3 illustrate only a portion of the shell body 23.

The shell body 23 defines a shell cavity 24, which is formed between the bases 21 of the shell 20 and which is delimited by an inner surface of the shell body 23. Moreover, the shell body 23 has a shell opening 25 providing access to the shell cavity 24. The shell opening 25 is formed at one of the basis 21 of the shell 20, in particular the second base of the shell 20. The shell opening 25 is arranged transversely, and preferably perpendicularly, to the axial direction X-X. In detail the shell opening 25 extends around a shell axis extending in the axial direction X-X.

The shield 30 closes and seals the shell opening 25, preventing leakage of a fluid contained in the shell cavity 24, such as a high pressure gas. The shield 30 comprises a shield wall 31 facing the shell cavity 24 in the axial direction X-X. In detail the shield wall 31, and preferably the whole shield 30, is arranged transversely to the axial direction X-X, in the embodiment of the figures perpendicularly to the axial direction X-X.

The shield 30 is removably fastened to the shell body 23. In detail the shell 20 comprises fastening means 26 for fastening the shield 30 to the shell body 23, which are arranged preferably around the shell opening 25. The fastening means 26 are releasable for removing the shield 30 from the shell body 23. The fastening means 26 may comprise bolts or any other suitable means which are known to the skilled person.

During the assembly of the electric motor 10, the shell 20 is switched from the open to the closed configuration for sealing the shell opening 25 with the following steps:
- aligning the shield 30 to the shell opening 25 in the axial direction X-X, such that the shield 30 and the shell body 23 are spaced in the axial direction X-X,
- moving the shield 30 toward the shell body 23 in the axial direction X-X until the shield 30 is in contact with the shell body 23,
- fastening the shield 30 to the shell body 23 by the fastening means 26.

The electric motor 10 comprises a stator 40 arranged inside the shell cavity 24. In particular the stator 40 is insertable into and extractable from the shell cavity 24 through the shell opening 25, when the shell 20 is in the open configuration. In the assembled condition the stator 40 rests firmly on the inner surface of the shell body 23, and is optionally fixed to the shell body 23.

The stator 40 defines a stator cavity 41 which has a substantially cylindrical shape and which extends around a stator axis extending in the axial direction X-X. The stator comprises a stator body 42, made of a magnetic material, and conductive stator windings 43 associated to the stator body 42 in a known manner.

In particular a stator winding 43 is provided for each phase of the electric motor 10, which are for example three phases. In the following, unless otherwise specified, the features of only one phase of the electric motor will be described for simplicity. Nevertheless such features must be considered as applicable to more phases, and preferably to each phase.

Feeding an appropriate electric current to the stator windings 43 generates a magnetic field in the stator body 42 and in the stator cavity 41. In the preferred embodiment the stator windings 43 are substantially rigid, and in particular they are impregnated and coated with a rigid insulating medium. For example, the rigid insulating medium is applied to the stator windings 43 with a vacuum pressure impregnation process (VPI process).

Inside the stator cavity 41, a rotor 50 is arranged having a substantially cylindrical shape. The rotor 50 comprises a rotor body made of magnetic material, and depending on the kind of electric motor 10 the rotor 50 may comprise rotor windings, a squirrel cage and/or permanent magnets associated to the rotor body, in a manner that is known to the skilled person.

The rotor 50 is rotatable with respect to the stator 40 about a rotor axis A-A extending in the axial direction X-X. In particular the rotor 50 is rotatable under the action of the magnetic field generated by the current in the stator windings 43. The rotor axis A-A extends through the shell opening 25 and through the shield 30. In the embodiment shown in the figures the rotor axis A-A coincides with the shell axis and with the stator axis.

The rotor 50 is associated to a drive shaft 51 extending mainly in the axial direction X-X. The motor 10 comprises bearing devices 52 associated to the shell body 23 and supporting rotationally the drive shaft 51.

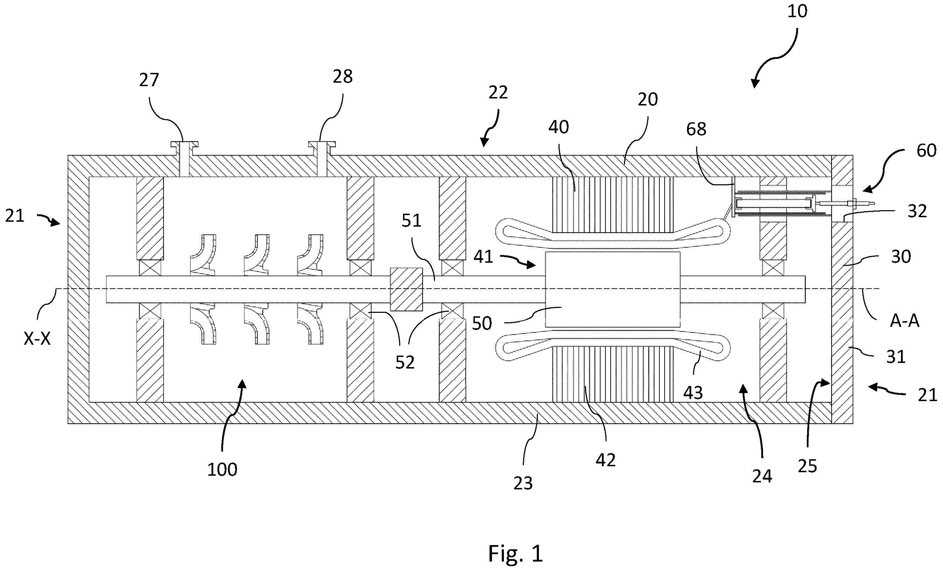

As it is shown in figure 1, a compressor 100 may be driven by the electric motor 10 through the drive shaft 51. The drive shaft 51 may be formed of one piece or more pieces fixed together.

The compressor 100 is arranged inside the shell cavity 24. In particular the shell body 23 may have a first portion adapted to house the stator 40, and a second portion adapted to house the compressor 100. In figures 2 and 3 only the first portion of the shell body 23 is visible, and means are illustrated for fastening the first portion and the second portion.

For the operation of the compressor 100, the shell 20 has an inlet opening 27 for inserting a working fluid inside the shell cavity 24, and an outlet opening 28 for discharging the working fluid outside the shell cavity 24. The compressor 100 is configured to receive the working fluid from the inlet opening 27, to process the working fluid, and to discharge the working fluid through the outlet opening 28.

It is to be noted that the shell cavity 20 is filled with the working fluid, which has a pressure of at least 10 bar, preferably at least 50 bar. Therefore, any sealing described with reference to the electric motor 10, and in particular to the components of the shell 20, must withstand the pressure of the working fluid and avoid leakage thereof.

The motor 10 comprises connecting means 60 for connecting the stator windings 43 with an electric power source (not shown). The electric power source may be any known circuit or apparatus suitable for providing a voltage and a current adapted to drive the electric motor 10 when supplied to the stator windings 43. The electric power source is arranged outside the shell cavity 24, and comprises at least one terminal.

The connecting means 60 are configured to connect electrically and mechanically the stator windings 43 with respective terminals of the electric power source, as it is described with greater detail in the following. In particular, the electric power source comprise a terminal for each phase of the electric motor 10, and the connecting means 60 connect one of the stator windings 43 with one of the terminals of the power source for each phase.

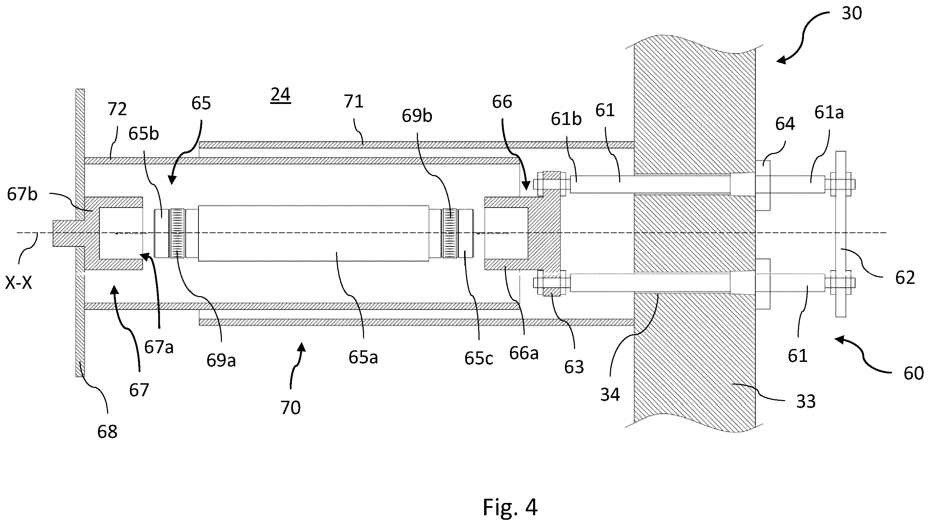

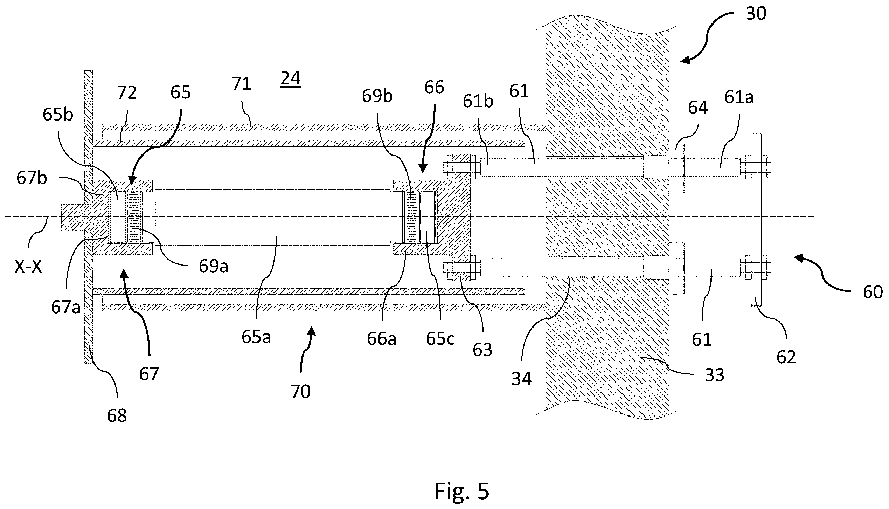

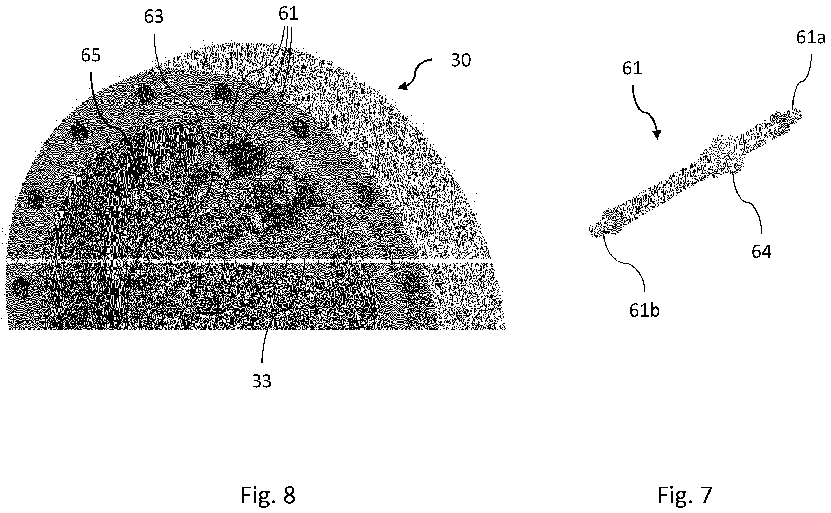

The connecting means 60 comprise a conductive rod 61 extending through the shell 20, and in particular through the shield 30, and in particular at least a conductive rod 61 for each phase. Preferably, the connecting means 60 comprise a plurality of conductive rods 61 for each phase of the electric motor 10. In the figures 2-5 two conductive rods 61 are visible for one phase, but in the preferred embodiment the connecting means 60 comprise three conductive rods 61 for each phase, as it is shown in figure 8. The features of one conductive rod 61 are described with reference to the features of all the conductive rods 61.

The conductive rod 61 extends mainly in the axial direction X-X. An insulating coating surrounds tightly the conductive rod 61 and prevents electric contact of the conductive rod 61 with the shield 30.

The conductive rod 61 extends between a first end portion 61a protruding from the shield 30 outside the shell cavity 24 and a second end portion 61b protruding from the shield 30 inside the shell cavity 24. The first end portion 61a of the conductive rod 61 is electrically connected to a terminal of the electric power supply, directly or with the interposition of any suitable means of connection, depending on the shape of the terminal.

Optionally, the first end portions 61a of a plurality of conductive rods 61 which are relative to the same phase are electrically connected together, for example being fixed directly to a connecting piece 62 arranged outside the shell cavity 24 and made of a conductive material. The connecting piece 62 is preferably formed as a flange.

Similarly, the connecting means 60 comprise a connecting flange 63 arranged inside the shell cavity 24 and made of a conductive material, preferably one connecting flange 63 for each phase. All the conductive rods 61 of one phase are fixed to the relative connecting flange 63 at the second end portions 61b. Preferably, the conductive rods 61 of a phase are angularly spaced apart along an edge portion of the connecting piece 62 and along an edge portion of the connecting flange 63.

For the purpose of supporting the conductive rods 61, the shield wall 31 has a shield opening 32, and the shield 30 comprises a non-magnetic closing member 33, made for example of steel, which closes the shield opening 32. The closing member 33 is transversal, and in detail perpendicular, to the axial direction X-X.

The closing member 33 is fixed to the shield wall 31, for example being fastened to the shield wall 31 by bolts or any other suitable means. In the preferred embodiment the closing member 33 is arranged within the shield opening 32.

The closing member 33 has a through hole 34, and in particular the closing member 33 has a through hole 34 for each conductive rod 61. In the preferred embodiment only one closing member 33 is provided having through holes 34 for all the conductive rods 61 of all the phases of the electric motor 10. However, in alternative embodiments a closing member 33 may be provided for each phase of the electric motor 10, each closing member 33 closing a respective shield opening 32.

The conductive rod 61 is fixed to the closing member 33 and is arranged through the through hole 34 of the closing member 33. The insulating coating insulates the conductive rod 61 from the closing member.

In the preferred embodiment a fixing element 64 is fixed to the conductive rod 61 and is removably fixed to the closing member 33. The fixing element 64 is shown particularly in figure 7. For example the fixing element 64 may be a nut having a hole, the conductive rod 61 being interference fitted inside the hole of the nut. Moreover, the fixing element 64 may have a threaded portion configured to be screwed within a threaded portion of the closing member 33, which is provided preferably inside the through hole 34. The conductive rod 61 and the fixing element 64 close and seal the through hole 34 of the closing member 33.

The connecting means 60 comprise a first terminal 65 which is rigidly associated to the conductive rod 61. In particular, the first terminal 65 is associated to the conductive rod 61 electrically and mechanically. However, no flexible cables are foreseen between the conductive rod 61 and the first terminal 65.

Since the first terminal 65 is rigidly associated to the conductive rod 61, while the conductive rod 61 is fixed to the closing member 33 of the shield 30 and the closing member 33 is fixed to the shield wall 31, the first terminal 65 is also rigidly connected to the shield 30, and in particular to the shield wall 31. In detail, when the shell 20 is in the open configuration, i.e. when the fastening means 26 are in a released condition, the first terminal 65 is movable jointly with the shield 30, so that the assembly of the shield 30 and the first terminal 65 is movable as a rigid body. However, this does not exclude that the first terminal 65 may be removable from the shield 30, as it will be clear in a following part of the description.

The first terminal is arranged inside the shell cavity 24, and protrudes from the shield 30 in the axial direction X-X. The first terminal is oriented toward the stator 40.

In one embodiment the first terminal is defined by the second end portion 61b of the conductive rod 61. However, in the following of the description reference will be made to other more preferred embodiments where the first terminal 65 and the conductive rod 61 are formed as two distinct elements, and the first terminal 65 is a rigid terminal fixed to the conductive rod 61.

The connecting means 60 comprise a holding member 66 fixed to the conductive rod 61 at the second end portion 61b of the conductive rod 61. In the preferred embodiment the holding member 66 is formed in one piece with the connecting flange 63 or in other words the holding member 66 comprises the connecting flange 63.

The first terminal 65 is removably fixed to the holding member 66, as it will be explained in greater detail in a following part of the description. Accordingly, the first terminal 65 is rigidly associated to the conductive rod 61 and to the connecting flange 63 through the holding member 66.

The connecting means 60 comprise a second terminal 67 rigidly connected to a respective stator winding 43 and oriented toward the shield 30. The second terminal 67 is preferably a rigid terminal fixed to the stator windings 43. In particular, the second terminal 67 is connected electrically and mechanically to its respective stator winding 43.

This connection may be direct, or as an alternative other rigid connecting means may be provided between the second terminal 67 and the stator winding 43. However, no flexible cables are foreseen between the second terminal 67 and the stator winding 43.

In order to ensure a greater mechanical stability of the second terminal 67, the second terminal 67 may be fixed, directly or indirectly, to the stator 40 and/or to the shell body 23. In particular, the connecting means 60 may comprise a supporting plate 68 fixed to the shell body 23 and/or to the stator 40. In the preferred embodiment the supporting plate 68 is fixed to the shell body 23, as it is visible from figures 2 and 3.

The supporting plate 68 is arranged between the stator 40 and the shield 30. Moreover, the supporting plate 68 is arranged transversely, preferably perpendicularly, to the axial direction X-X.

The second terminal 67 is fixed to the supporting plate 68, and protrudes from the supporting plate 68 in the axial direction X-X toward the shield 30. In the embodiment of the figures, the supporting plate 68 has a hole, and the second terminal 67 is fitted inside the hole. Moreover, the second terminal 67 is connected to the respective stator winding 43 from the side of the stator 40.

Preferably, only one supporting plate 68 is provided and the second terminals 67 relative to the different phases are all fixed to the only supporting plate 68. However, more supporting plates 68 may be provided, for example one for each phase. The supporting plate 68 is made of an insulating material for preventing electric contacts between the second terminal 67 and the shell 30 and/or the stator body 42, or between second terminals 67 of different phases.

The first terminal 65 is directly and removably connected to the second terminal 67 for electrically connecting the stator winding 43 with the conductive rod 61, and therefore with the power supply connected to the conductive rod 43. In particular, the second terminal 67 is aligned to the first terminal 65 in the axial direction X-X.

Advantageously, when the fastening means 26 are in released condition, the first terminal 65 may be movable jointly with the shield 30 in the axial direction X-X for connecting to and disconnecting from the second terminal 67.

In particular, with reference to the above described steps of assembling the electric motor, during the step of aligning the shield 30 to the shell opening 25 the first terminal 65 is aligned to the second terminal 67 in the axial direction X-X. Therefore advantageously the electrical connection of the stator winding 43 with the conductive rod 61 through the first terminal 65 and the second terminal 67 is obtained concomitantly with the step of moving the shield 30 toward the shell body 23.

Preferably, the first terminal 65 and the second terminal 67 comprise a male terminal and a female terminal. In the embodiment shown in the figures the first terminal 65 comprises the male terminal, and the second terminal 67 comprises the female terminal, and the reference numbers adhere to this embodiment. However, a person skilled in the art will be able to switch the male terminal and the female terminal without departing from the scope of the invention.

The female terminal defines a seat 67a, for example the female terminal comprises a first receptacle 67b formed as a cup and defining the seat 67a. **In** the embodiment where the female terminal is the second terminal 67, the seat 67a is open toward the shell opening 25.

The male terminal engages removably the seat 67a of the female terminal. Preferably the male terminal comprises a conductive bar 65a extending in the axial direction X-X between a first end portion 65b and a second end portion 65c, and the first end portion 65b of the conductive bar 65a engages removably the first receptacle 67b.

Optionally, the conductive bar 65a comprises a first friction member 69a located at the first end portion 65b of the conductive bar 65a. The first friction member 69a retains frictionally the first end portion 65b of the conductive bar 65a inside the first receptacle 67b. For example, the first friction member 69a may comprise one or more ribs interfering with the first receptacle 67b. **In** the preferred embodiment the first friction member 69a comprises a plurality of ribs extending in the axial direction X-X and mutually spaced apart around a lateral surface of the conductive bar 65a.

**In** the embodiment where the male terminal is the first terminal 65, the holding member 66 may comprise a second receptacle 66a, which is open toward the stator 40. The second receptacle 66a may be formed similarly to the first receptacle 67b, and in particular it may be formed as a cup. The first and the second receptacles 66a, 67b are preferably open one toward the other, and they are spaced apart in the axial direction X-X.

The second end portion 65c of the conductive bar 65a engages removably the second receptacle 66a. Therefore, the conductive bar 65a is arranged between the first and the second receptacles 66a, 67b. More in general, the first terminal 65 is removably connected to the holding member 66 on one side, and to the second terminal 67 on the other side.

It is to be noted that in one embodiment the first and the second end portions 65b, 65c of the conductive bar 65a are substantially equal and interchangeable.

In fact, the conductive bar 65a may comprise a second friction member 69b located at the second end portion 65c of the conductive bar 65a. The second friction member 69b retains frictionally the second end portion 65c of the conductive bar 65a inside the second receptacle 66a. In particular, the second friction member 69b may comprise one or more ribs interfering with the second receptacle 66a, similarly to the ribs of the first friction member 69a.

In this embodiment, assembling the electric motor 10 involves the step of fixing the first terminal 65 to the shield 30, before the step aligning the shield 30 to the shell opening 25. This is obtained by fixing the first terminal 65 to the holding member 66, and in detail by engaging the second end portion 65c of the conductive bar 65a inside the second receptacle 66a.

As an alternative, the first terminal 65 may be first connected to the second terminal 67 when the shell 20 is in the open configuration, and then the first terminal 65 is connected to the holding member 66 by moving the shield 30 jointly to the holding member 66 toward the shell body 23.

Upon removing the shield 30 from the shell body 23, the first terminal 65 disconnects from either of the holding member 66 or the second terminal 67. In both cases the second terminal 67 is no more in electric contact with the pass through rod 61 and therefore with the external power source.

Preferably, the electric motor 10, comprises an insulating assembly 70 surrounding the first terminal 65 and the second terminal 67. In particular, an insulating assembly 70 is provided for each phase of the electric motor 10.

The insulating assembly 70 prevents the generation of superficial conductive paths between the connecting means 60 and the other parts of the electric motor 10, with consequent electric faults. **In** detail the insulating assembly 70 prevents dirt and particle deposition upon other insulating elements. A special protection in fact is required on the supporting plate 68 against contacts between second terminals 67 of distinct phases, and on the insulating coating of the conductive rods 61 against contacts between the closing member 33 and the first terminal 65 or the holding member 66.

**In** the preferred embodiment the insulating assembly 70 comprises a shield side insulating sleeve 71 and a stator side insulating sleeve 72. Both the sleeves 71, 72 extend mainly in the axial direction X-X. Moreover, both the sleeves 71, 72 define respective channels, and the first and second terminals 65, 67 are arranged inside both the channels. Preferably, also the holding member 66 is arranged inside both the channels. However, both the sleeves 71, 72 are spaced from both the terminals 65, 67, and thus impediments during the connection of the terminals 65, 67 are prevented.

**In** detail, one of the shield side and the stator side insulating sleeve 71, 72 surrounds the other of the shield side and the stator side insulating sleeve 71, 72. **In** the illustrated embodiment the shield side insulating sleeve 71 surrounds the stator side insulating sleeve 72, i.e. the stator side insulating sleeve 72 is arranged inside the channel of the shield side insulating sleeve 71. Therefore, the terminals 65, 67 are arranged inside the stator side insulating sleeve 72, which in turn is arranged inside the shield side insulating sleeve 71.

The shield side insulating sleeve 71 is rigidly connected to the first terminal 65, directly or indirectly. **In** particular the shield side insulating sleeve 71 is fixed directly to the shield 30, and more in detail to the closing member 33. The shield side insulating sleeve 71 protrudes from the shield 30 almost to the supporting plate 68. In the illustrated embodiment a first gap is defined between the shield side insulating sleeve 71 and the supporting plate 68.

The stator side insulating sleeve 72 is rigidly connected to the first terminal 67, directly or indirectly. In the illustrated embodiment in fact the stator side insulating sleeve 72 is fixed directly to the insulating plate 68. The stator side insulating sleeve 72 protrudes from the supporting plate 68 almost to the shield 30. In the illustrated embodiment a second gap is defined between the stator side insulating sleeve 72 and the shield 30.

Advantageously, the working fluid must pass through a zigzag path across the first and the second gap in order to reach the terminals 65, 67, and therefore particle deposition is almost prevented at the terminals 65, 67. Moreover, superficial conductive paths on the insulating plate 68 between the second terminals 67 of distinct phases are made particularly difficult to generate since such a path would have to pass over two distinct stator side insulating sleeves 72.

Obviously, a person skilled in the art can apply many variations to the specific embodiments of the invention which have been described, without departing from the scope of protection as defined by the appended claims.

## Claims

1. An electric motor (10), comprising:
- a shell (20) comprising a shell body (23) defining a shell cavity (24), the shell body (23) having a shell opening (25), the shell (20) comprising a shield (30) removably fastened to the shell body (23) for closing and sealing the shell opening (25),
- a stator (40) defining a stator cavity (41), the stator (40) being arranged inside the shell cavity (24) and comprising conductive stator windings (43),
- a rotor (50) arranged in the stator cavity (41), the rotor (50) being rotatable with respect to the stator (40) about a rotor axis (A-A), the rotor axis (A-A) extending through the shell opening (25) in an axial direction (X-X),
- connecting means (60) for connecting the stator windings (43) with an electric power source,
wherein said connecting means (60) comprise:
- a conductive rod (61) extending through the shield (30) of the shell (20) and configured to be connected with the electric power source,
- a first terminal (65) rigidly associated to the conductive rod (61) and arranged inside the shell cavity (24),
- a supporting plate (68) made of an insulating material, the supporting plate (68) being fixed to the shell body (23) and/or to the stator (40),
- a second terminal (67) rigidly connected to a respective stator winding (43) and fixed to the supporting plate (68), the first terminal (65) being directly and removably connected to the second terminal (67) for electrically connecting the stator winding (43) with the conductive rod (61),
the electric motor (10) further comprising:
- an insulating assembly (70) surrounding the first terminal (65) and the second terminal (67), the insulating assembly (70) comprising a shield side insulating sleeve (71) and a stator side insulating sleeve (72), the shield side insulating sleeve (71) and the stator side insulating sleeve (72) being directly fixed to the shield (30) and to the insulating plate (68) respectively, one of the shield side insulating sleeve (71) and the stator side insulating sleeve (72) surrounding the other of the shield side insulating sleeve (71) and the stator side insulating sleeve (72),
wherein both the shield side insulating sleeve (71) and the stator side insulating sleeve (72) extend mainly in the axial direction (X-X) and define respective channels, and the first and second terminals (65, 67) are arranged inside both the channels.

2. An electric motor (10) according to claim 1, wherein the first terminal (65) is a rigid terminal fixed to the conductive rod (61), and the second terminal (67) is a rigid terminal fixed to the respective stator winding (43).

3. An electric motor (10) according to claim 1 or 2, wherein:
- the first terminal (65) protrudes from the shield (30) in the axial direction (X-X), and
- the second terminal (67) is aligned to the first terminal (65) in the axial direction (X-X).

4. An electric motor (10) according to any of claims 1 to 3, wherein the shield (30) and the shell opening (25) are arranged transverse to the axial direction (X-X).

5. An electric motor (10) according to any of claims 1 to 4, wherein the first terminal (65) and the second terminal (67) comprise a male terminal and a female terminal, the female terminal defining a seat (67a), the male terminal engaging removably in the seat (67a) of the female terminal.

6. An electric motor (10) according to claim 5, wherein:
- the female terminal comprises a first receptacle (67b), and
- the male terminal comprises a conductive bar (65a) extending in the axial direction (X-X) between a first end portion (65b) and a second end portion (65c), the first end portion (65b) of the conductive bar (65a) engaging removably the first receptacle (67b).

7. An electric motor (10) according to claim 6, wherein said conductive bar (65a) comprises a first friction member (69a) located at the first end portion (65b) of the conductive bar (65a), the first friction member (69a) retaining frictionally the first end portion (65b) of the conductive bar (65a) inside the first receptacle (67b).

8. An electric motor (10) according to any of claims 1 to 7, wherein:
- the shield (30) comprises a shield wall (31) having a shield opening (32),
- the shield (30) comprises a non-magnetic closing member (33) fixed to the shield wall (31), the closing member (33) closing the shield opening (32), the closing member (33) having a through hole (34),
- the conductive rod (61) is fixed to the closing member (33) and is arranged through the through hole (34) of the closing member (33).

9. An electric motor (10) according to any of claims 1 to 8, wherein:
- the conductive rod (61) extends between a first end portion (61a) protruding from the shield (30) outside the shell cavity (24) and a second end portion (61b) protruding from the shield (30) inside the shell cavity (24), the first end portion (61a) being configured to be connected with the electric power source,
- the connecting means (60) comprise a holding member (66) fixed to the conductive rod (61) at the second end portion (61b) of the conductive rod (61), the first terminal (65) being removably fixed to the holding member (66).

10. An electric motor (10) according claims 6 and 9, wherein:
- said first terminal (65) comprises said male terminal, and said second terminal (67) comprises said female terminal,
- the holding member (66) comprises a second receptacle (66a), the second end portion (65c) of the conductive bar (65a) engaging removably the second receptacle (66a).

11. An electric motor (10) according to any of claims 1 to 10, wherein said connecting means (60) comprise a plurality of conductive rods (61) and a connecting flange (63), said plurality of conductive rods (61) being fixed to the connecting flange (63), the first terminal (65) being rigidly associated to the connecting flange (63).

12. An electric motor (10) according to any of claims 1 to 11, wherein:
- the shell (20) comprises fastening means (26) for fastening the shield (30) to the shell body (23), the fastening means (26) being releasable for removing the shield (30) from the shell body (23),
- when the fastening means (26) are in released condition, the first terminal (65) is movable jointly with the shield (30) in the axial direction (X-X) for connecting to and disconnecting from the second terminal (67).

## Patentansprüche

1. Elektromotor (10), umfassend:
- ein Gehäuse (20), umfassend einen Gehäusekörper (23), der einen Gehäusehohlraum (24) definiert, wobei der Gehäusekörper (23) eine Gehäuseöffnung (25) aufweist, wobei das Gehäuse (20) eine Abschirmung (30) umfasst, die entfernbar an dem Gehäusekörper (23) zum Verschließen und Abdichten der Gehäuseöffnung (25) befestigt ist,
- einen Stator (40), der einen Statorhohlraum (41) definiert, wobei der Stator (40) innerhalb des Gehäusehohlraums (24) angeordnet ist und leitfähige Statorwicklungen (43) umfasst,
- einen in dem Statorhohlraum (41) angeordneten Rotor (50), wobei der Rotor (50) in Bezug auf den Stator (40) um eine Rotorachse (A-A) drehbar ist, wobei sich die Rotorachse (A-A) durch die Gehäuseöffnung (25) in einer axialen Richtung (X-X) erstreckt,
- Verbindungsmittel (60) zum Verbinden der Statorwicklungen (43) mit einer elektrischen Energiequelle,
wobei die Verbindungsmittel (60) Folgendes umfassen:
- eine leitfähige Stange (61), die sich durch die Abschirmung (30) des Gehäuses (20) erstreckt und dazu konfiguriert ist, mit der elektrischen Energiequelle verbunden zu sein,
- einen ersten Anschluss (65), der starr mit der leitfähigen Stange (61) verbunden und innerhalb des Gehäusehohlraums (24) angeordnet ist,
- eine Stützplatte (68) aus einem isolierenden Material, wobei die Stützplatte (68) an dem Gehäusekörper (23) und/oder an dem Stator (40) befestigt ist,
- einen zweiten Anschluss (67), der starr mit einer entsprechenden Statorwicklung (43) verbunden und an der Stützplatte (68) befestigt ist, wobei der erste Anschluss (65) direkt und entfernbar mit dem zweiten Anschluss (67) verbunden ist, um die Statorwicklung (43) mit der leitenden Stange (61) elektrisch zu verbinden,
wobei der Elektromotor (10) ferner Folgendes umfasst:
- eine Isolierbaugruppe (70), die den ersten Anschluss (65) und den zweiten Anschluss (67) umgibt, wobei die Isolierbaugruppe (70) eine schirmseitige Isolierhülse (71) und eine statorseitige Isolierhülse (72) umfasst, wobei die schirmseitige Isolierhülse (71) und die statorseitige Isolierhülse (72) jeweils direkt an der Abschirmung (30) und an der Isolierplatte (68) befestigt sind, wobei eine der schirmseitigen Isolierhülse (71) und der statorseitigen Isolierhülse (72) die andere der schirmseitigen Isolierhülse (71) und der statorseitigen Isolierhülse (72) umgibt,
wobei sich sowohl die schirmseitige Isolierhülse (71) als auch die statorseitige Isolierhülse (72) hauptsächlich in der axialen Richtung (X-X) erstrecken und jeweilige Kanäle definieren, und die ersten und zweiten Anschlüsse (65, 67) innerhalb beider Kanäle angeordnet sind.

2. Elektromotor (10) nach Anspruch 1, wobei der erste Anschluss (65) ein starrer Anschluss ist, der an der leitenden Stange (61) befestigt ist, und der zweite Anschluss (67) ein starrer Anschluss ist, der an der entsprechenden Statorwicklung (43) befestigt ist.

3. Elektromotor (10) nach Anspruch 1 oder 2, wobei:
- der erste Anschluss (65) in der axialen Richtung (X-X) von der Abschirmung (30) vorsteht und
- der zweite Anschluss (67) in der axialen Richtung (X-X) auf den ersten Anschluss (65) ausgerichtet ist.

4. Elektromotor (10) nach einem der Ansprüche 1 bis 3, wobei die Abschirmung (30) und die Gehäuseöffnung (25) quer zu der axialen Richtung (X-X) angeordnet sind.

5. Elektromotor (10) nach einem der Ansprüche 1 bis 4, wobei der erste Anschluss (65) und der zweite Anschluss (67) einen Steckeranschluss und einen Buchsenanschluss umfassen, wobei der Buchsenanschluss einen Sitz (67a) definiert und der Steckeranschluss entfernbar in den Sitz (67a) des Buchsenanschlusses eingreift.

6. Elektromotor (10) nach Anspruch 5, wobei:
- der Buchsenanschluss eine erste Aufnahme (67b) umfasst, und
- der Steckeranschluss eine leitende Stange (65a) umfasst, die sich in der axialen Richtung (X-X) zwischen einem ersten Endabschnitt (65b) und einem zweiten Endabschnitt (65c) erstreckt, wobei der erste Endabschnitt (65b) der leitenden Stange (65a) entfernbar in die erste Aufnahme (67b) eingreift.

7. Elektromotor (10) nach Anspruch 6, wobei die leitfähige Stange (65a) ein erstes Reibungselement (69a) umfasst, das sich an dem ersten Endabschnitt (65b) der leitfähigen Stange (65a) befindet, wobei das erste Reibungselement (69a) den ersten Endabschnitt (65b) der leitfähigen Stange (65a) innerhalb der ersten Aufnahme (67b) reibschlüssig festhält.

8. Elektromotor (10) nach einem der Ansprüche 1 bis 7, wobei:
- die Abschirmung (30) eine Abschirmwand (31) mit einer Abschirmöffnung (32) umfasst,
- die Abschirmung (30) ein nichtmagnetisches Schließelement (33) umfasst, das an der Abschirmwand (31) befestigt ist, wobei das Schließelement (33) die Abschirmöffnung (32) verschließt und das Schließelement (33) ein Durchgangsloch (34) aufweist,
- die leitfähige Stange (61) an dem Schließelement (33) befestigt ist und durch das Durchgangsloch (34) des Schließelements (33) hindurch angeordnet ist.

9. Elektromotor (10) nach einem der Ansprüche 1 bis 8, wobei:
- die leitende Stange (61) sich zwischen einem ersten Endabschnitt (61a), der von der Abschirmung (30) außerhalb des Gehäusehohlraums (24) vorsteht, und einem zweiten Endabschnitt (61b), der von der Abschirmung (30) innerhalb des Gehäusehohlraums (24) vorsteht, erstreckt, wobei der erste Endabschnitt (61a) dazu konfiguriert ist, mit der elektrischen Energiequelle verbunden zu sein,
- die Verbindungsmittel (60) ein Halteelement (66) umfassen, das an der leitenden Stange (61) an dem zweiten Endabschnitt (61b) der leitenden Stange (61) befestigt ist, wobei der erste Anschluss (65) entfernbar an dem Halteelement (66) befestigt ist.

10. Elektromotor (10) nach Anspruch 6 und 9, wobei:
- der erste Anschluss (65) den Steckanschluss umfasst, und der zweite Anschluss (67) den Buchsenanschluss umfasst,
- das Halteelement (66) eine zweite Aufnahme (66a) umfasst, wobei der zweite Endabschnitt (65c) der leitenden Stange (65a) entfernbar in die zweite Aufnahme (66a) eingreift.

11. Elektromotor (10) nach einem der Ansprüche 1 bis 10, wobei die Verbindungsmittel (60) eine Vielzahl von leitenden Stangen (61) und einen Verbindungsflansch (63) umfassen, wobei die Vielzahl von leitenden Stangen (61) an dem Verbindungsflansch (63) befestigt ist und der erste Anschluss (65) starr mit dem Verbindungsflansch (63) verbunden ist.

12. Elektromotor (10) nach einem der Ansprüche 1 bis 11, wobei:
- das Gehäuse (20) Befestigungsmittel (26) zum Befestigen der Abschirmung (30) an dem Gehäusekörper (23) umfasst, wobei die Befestigungsmittel (26) entfernbar sind, um die Abschirmung (30) von dem Gehäusekörper (23) zu entfernen,
- wenn sich die Befestigungsmittel (26) in gelöstem Zustand befinden, der erste Anschluss (65) gemeinsam mit der Abschirmung (30) in der axialen Richtung (X-X) bewegbar ist, um sich mit dem zweiten Anschluss (67) zu verbinden und sich von ihm zu trennen.

## Revendications

1. Moteur électrique (10) comprenant :
- une coque (20) comprenant un corps de coque (23) définissant une cavité de coque (24), le corps de coque (23) ayant une ouverture de coque (25), la coque (20) comprenant un écran (30) fixé de manière amovible au corps de coque (23) pour fermer et sceller l'ouverture de coque (25),
- un stator (40) définissant une cavité de stator (41), le stator (40) étant disposé à l'intérieur de la cavité de coque (24) et comprenant des enroulements de stator conducteurs (43),
- un rotor (50) disposé dans la cavité de stator (41), le rotor (50) pouvant tourner par rapport au stator (40) autour d'un axe de rotor (A-A), l'axe de rotor (A-A) s'étendant à travers l'ouverture de coque (25) dans une direction axiale (X-X),
- des moyens de connexion (60) pour connecter les enroulements du stator (43) à une source d'énergie électrique,
dans lequel lesdits moyens de connexion (60) comprennent :
- une tige conductrice (61) s'étendant à travers l'écran (30) de la coque (20) et configurée pour être connectée à la source d'énergie électrique,
- une première borne (65) associée de manière rigide à la tige conductrice (61) et disposée à l'intérieur de la cavité de coque (24),
- une plaque de support (68) en matériau isolant, la plaque de support (68) étant fixée au corps de coque (23) et/ou au stator (40),
- une seconde borne (67) connectée de manière rigide à un enroulement de stator (43) respectif et fixée à la plaque de support (68), la première borne (65) étant connectée directement et de manière amovible à la seconde borne (67) pour connecter électriquement l'enroulement de stator (43) à la tige conductrice (61),
le moteur électrique (10) comprenant en outre :
- un ensemble isolant (70) entourant la première borne (65) et la seconde borne (67), l'ensemble isolant (70) comprenant un manchon isolant côté écran (71) et un manchon isolant côté stator (72), le manchon isolant côté écran (71) et le manchon isolant côté stator (72) étant directement fixés respectivement à l'écran (30) et à la plaque isolante (68), l'un du manchon isolant côté écran (71) et du manchon isolant côté stator (72) entourant l'autre du manchon isolant côté écran (71) et du manchon isolant côté stator (72),
dans lequel le manchon isolant côté écran (71) et le manchon isolant côté stator (72) s'étendent principalement dans la direction axiale (X-X) et définissent des canaux respectifs, et les première et seconde bornes (65, 67) sont disposées à l'intérieur des deux canaux.

2. Moteur électrique (10) selon la revendication 1, dans lequel la première borne (65) est une borne rigide fixée à la tige conductrice (61), et la seconde borne (67) est une borne rigide fixée à l'enroulement de stator respectif (43).

3. Moteur électrique (10) selon la revendication 1 ou 2, dans lequel :
- la première borne (65) fait saillie de l'écran (30) dans la direction axiale (X-X), et
- la seconde borne (67) est alignée sur la première borne (65) dans la direction axiale (X-X).

4. Moteur électrique (10) selon l'une quelconque des revendications 1 à 3, dans lequel l'écran (30) et l'ouverture de coque (25) sont disposés transversalement à la direction axiale (X-X).

5. Moteur électrique (10) selon l'une quelconque des revendications 1 à 4, dans lequel la première borne (65) et la seconde borne (67) comprennent une borne mâle et une borne femelle, la borne femelle définissant un siège (67a), la borne mâle s'engageant de manière amovible dans le siège (67a) de la borne femelle.

6. Moteur électrique (10) selon la revendication 5, dans lequel :
- la borne femelle comprend un premier réceptacle (67b), et
- la borne mâle comprend une barre conductrice (65a) s'étendant dans la direction axiale (X-X) entre une première partie d'extrémité (65b) et une seconde partie d'extrémité (65c), la première partie d'extrémité (65b) de la barre conductrice (65a) engageant de manière amovible le premier réceptacle (67b).

7. Moteur électrique (10) selon la revendication 6, dans lequel ladite barre conductrice (65a) comprend un premier élément de friction (69a) situé au niveau de la première partie d'extrémité (65b) de la barre conductrice (65a), le premier élément de friction (69a) retenant par friction la première partie d'extrémité (65b) de la barre conductrice (65a) à l'intérieur du premier réceptacle (67b).

8. Moteur électrique (10) selon l'une quelconque des revendications 1 à 7, dans lequel :
- l'écran (30) comprend une paroi d'écran (31) ayant une ouverture d'écran (32),
- l'écran (30) comprend un élément de fermeture non magnétique (33) fixé à la paroi d'écran (31), l'élément de fermeture (33) fermant l'ouverture d'écran (32), l'élément de fermeture (33) ayant un trou traversant (34),
- la tige conductrice (61) est fixée à l'élément de fermeture (33) et est disposée à travers le trou traversant (34) de l'élément de fermeture (33).

9. Moteur électrique (10) selon l'une quelconque des revendications 1 à 8, dans lequel :
- la tige conductrice (61) s'étend entre une première partie d'extrémité (61a) faisant saillie de l'écran (30) à l'extérieur de la cavité de coque (24) et une seconde partie d'extrémité (61b) faisant saillie de l'écran (30) à l'intérieur de la cavité de coque (24), la première partie d'extrémité (61a) étant configurée pour être connectée à la source d'énergie électrique,
- les moyens de connexion (60) comprennent un élément de maintien (66) fixé à la tige conductrice (61) au niveau de la seconde partie d'extrémité (61b) de la tige conductrice (61), la première borne (65) étant fixée de manière amovible à l'élément de maintien (66).

10. Moteur électrique (10) selon les revendications 6 et 9, dans lequel :
- ladite première borne (65) comprend ladite borne mâle, et ladite seconde borne (67) comprend ladite borne femelle,
- l'élément de maintien (66) comprend un second réceptacle (66a), la seconde partie d'extrémité (65c) de la barre conductrice (65a) s'engageant de manière amovible dans le second réceptacle (66a).

11. Moteur électrique (10) selon l'une quelconque des revendications 1 à 10, dans lequel lesdits moyens de connexion (60) comprennent une pluralité de tiges conductrices (61) et une bride de connexion (63), ladite pluralité de tiges conductrices (61) étant fixée à la bride de connexion (63), la première borne (65) étant associée de manière rigide à la bride de connexion (63).

12. Moteur électrique (10) selon l'une quelconque des revendications 1 à 11, dans lequel :
- la coque (20) comprend des moyens de fixation (26) pour fixer l'écran (30) au corps de coque (23), les moyens de fixation (26) étant libérables pour retirer l'écran (30) du corps de coque (23),
- lorsque les moyens de fixation (26) sont dans un état libéré, la première borne (65) est mobile conjointement avec l'écran (30) dans la direction axiale (X-X) pour se connecter et se déconnecter de la seconde borne (67).
